# EUROPEAN PATENT SPECIFICATION

(11) **EP 2 786 251 B1**
(45) Date of publication and mention of the grant of the patent: **23.08.2017**
(21) Application number: 12854218.0
(22) Date of filing: 15.11.2012
(51) Int. Cl.: G06F 9/46, G06F 9/44

(54) **ROLE INSTANCE REACHABILITY IN DATA CENTER**
ROLLENISTANZERREICHBARKEIT IN DATENZENTREN
ACCESSIBILITÉ D'INSTANCE DE RÔLE DANS UN CENTRE DE DONNÉES

(30) Priority: 28.11.2011 US 201113305105
(43) Date of publication of application: 08.10.2014
(73) Proprietor: Microsoft Technology Licensing, LLC, Redmond, WA 98052 (US)
(72) Inventor: PATEL, Parveen Kumar, Redmond, Washington 98052-6399 (US); BANSAL, Deepak, Redmond, Washington 98052-6399 (US); SANGUBHATLA, Murali Krishna, Redmond, Washington 98052-6399 (US); ZHAO, Wei, Redmond, Washington 98052-6399 (US); ZAN, Xinyan, Redmond, Washington 98052-6399 (US); SRIVASTAVA, Nisheeth, Redmond, Washington 98052-6399 (US)
(74) Representative: Grünecker Patent- und Rechtsanwälte PartG mbB
(86) International application number: PCT/US2012/065377
(87) International publication number: WO 2013/081848

(56) References cited:
- US-A1- 2008 016 580
- US-A1- 2010 106 768
- US-A1- 2010 106 812
- US-A1- 2010 198 970
- US-A1- 2011 158 088

## Description

### BACKGROUND

Large-scale networked systems are commonplace platforms employed in a variety of settings for running applications and maintaining data for business and operational functions. For instance, a hosting environment such as a data center (e.g., a physical cloud computing infrastructure) may provide a variety of services (e.g., web applications, email services, search engine services, etc.) for a plurality of customers simultaneously. These large-scale networked systems typically include a large number of resources distributed throughout the data center, in which each resource resembles a physical machine or a virtual machine running on a physical host. When the data center hosts multiple tenants (e.g., customer applications), these resources are optimally allocated from the same data center to the different tenants.

When a customer's application is implemented in a data center, the application may be provided by one or more roles that include portions of code of the application. Each role may typically have multiple role instances, with load balancing used to distribute messages from applications (e.g., external applications) to the various instances. Within such an infrastructure, it is desirable to allow a customer to transparently scale out their service by increasing or decreasing the physical machines, virtual machines, and/or role instances allocated to their service. Additionally, there are a number of scenarios in which a customer may wish to address a specific role instances over a network, such as the Internet. Examples include remote desktop, debugging, instance monitoring, task management (e.g., providing sticky sessions for certain applications), and inter-tenant communication between different applications.

One approach to provide instance reachability via a shared address in a load balanced setting would be to send application messages via a load balanced address and then write an application-specific connection forwarder to route the messages to the appropriate instances. However, this approach is inefficient and requires writing a custom protocol forwarder for each application protocol. Another approach to provide instance reachability would be to assign an exclusive IP address for each role instance. However, that solution would not scale well due to the need for large blocks of IP addresses. Furthermore, it makes setting up infrastructure, such as firewalls, more difficult as the addresses will change dynamically as the number of instances is increased or decreased.

US 2011/0158088 A1 discloses a method for use in a datacenter for load balancing services. The method includes obtaining, with the node controller, service configuration information for the service from the native registry that includes the service access information. The node controller activates the service on the network by configuring the content switch based on the obtained service configuration information. The method includes the service node publishing a service definition for the service that includes the service access information and other information such as a service name, an IP address, and a load balancing algorithm.

It is the object of the present invention to provide a system and method for role instance reachability in a data center with improved scalability.

This object is solved by the subject matter of the independent claims.

Embodiments are defined by the dependent claims.

### SUMMARY

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

Embodiments of the present invention relate to providing role instance reachability in a data center by allocating unique port numbers to role instances. In accordance with embodiments, instance endpoints may be assigned to role instances for a role within an application running in a data center. Each instance endpoint may comprise a combination of an IP address, a transport protocol, and a unique port number. Additionally, load balanced endpoints on the same shared address may be assigned to the group of role instances. The load balanced endpoint comprises a combination of an IP address, a transport protocol, and another unique port number. A load balancer may be programmed with the instance endpoints and the load balanced endpoint. Additionally, the instance endpoints and load balanced endpoints may be exposed to applications accessing the service application running in the data center. Accordingly, when the external applications issue messages to the data center using instance endpoints and the load balanced endpoint, the load balancer may appropriately route the messages to role instances. In particular, when a message includes an instance endpoint, the message may be directly routed to a role instance corresponding with that instance endpoint without load balancing. When a message includes the load balanced endpoint, the message may be directed to any one of the role instances in accordance with a load-balancing algorithm.

### BRIEF DESCRIPTION OF THE DRAWINGS

The present invention is described in detail below with reference to the attached drawing figures, wherein:
FIG. 1 is a block diagram of an exemplary computing environment suitable for use in implementing embodiments of the present invention;
FIG. 2 is a block diagram illustrating an exemplary cloud computing platform suitable for use in implement embodiments of the present invention;
FIG. 3 is a bock diagram illustrating a distributed computing environment in which an application may access role instances in a data center via either load balancing or directly in accordance with an embodiment of the present invention;
FIG. 4 is a block diagram illustrating a data center allocating load balanced endpoints and instance endpoints and directing messages to role instances in accordance with an embodiment of the present invention;
FIG. 5 is a flow diagram showing a method for configuring a data center with role instances having assigned instance endpoints and a load balanced endpoint to facilitate direct traffic and load balanced traffic to the role instances in accordance with an embodiment of the present invention; and
FIG. 6 is a flow diagram showing a method for programming a load balancer with instance endpoints and a load balanced endpoint and routing messages to role instances in accordance with an embodiment of the present invention.

### DETAILED DESCRIPTION

The subject matter of the present invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Embodiments of the present invention are directed to providing direct role instance reachability by breaking a single IP address into multiple endpoints. Generally, embodiments are directed to assigning unique port numbers to role instances and exposing each role instance as a unique public endpoint (i.e., an instance endpoint) as a combination of an IP address and a unique port number for particular transport protocols (e.g., TCP and UDP). These instance endpoints may coexist with a load balanced endpoint for the same set of role instances. Accordingly, embodiments may address the role instance reachability scenario in a generic and application protocol agnostic way. The approach allows for the mutual co-existence of load balancing and instance reachability via a shared address. As such, embodiments maintain business and engineering scalability in a data center.

In accordance with embodiments of the present invention, a customer may specify aspects of the service to be provided by a data center in a service model, including role instances that are to be exposed and individually reachable. Based on the customer's specifications in the service model, the data center allocates resources (e.g., physical machines and virtual machines) to run the customer's business application and also allocates a group of role instances for a particular role of the business application to the resources. In some embodiments, the data center may assign a load balanced endpoint to the group of role instances to allow for load balancing application messages across the role instances. The load balanced endpoint may be a public-facing endpoint that includes a combination of a public IP address, transport protocol, and a port number. In addition to assigning the load balanced endpoint to the group of role instances, the data center also assigns an instance endpoint to each role instance. In particular, the data center may allocate a unique port number to each role instance such that the instance endpoint for each role instance may include a combination of a public IP address, a transport protocol, and a unique port number. Each port number for the role instances is unique from other port numbers assigned to the other role instances and unique from the port number assigned for the load balanced endpoint in the case that the load balance endpoint and role instances share the same public IP address.

A load balancer in the data center is programmed with the load balanced endpoint and the instance endpoints for the group of role instances. Additionally, the load balanced endpoint and instance endpoints are exposed to applications (e.g., external applications, the application being hosted, and/or other applications). Accordingly, applications may initiate connections to the data center using the load balanced endpoint or the instance endpoints. When the load balancer receives a message via the load balanced endpoint, the load balancer directs the message to any one of the role instances in accordance with a load-balancing algorithm. When the load balancer receives a message via one of the instance endpoints, the load balancer directs the message to a particular role instance corresponding with that instance endpoint.

Accordingly, in one aspect, an embodiment of the present invention is directed to one or more computer storage media storing computer usable instructions that, when used by one or more computing devices, cause the one or more computing devices to perform a method. The method includes providing a plurality of role instances in a hosting environment. Each role instance includes code for a customer application running in the hosting environment. The method includes assigning a plurality of instance endpoints for the plurality of role instances. Each instance endpoint includes a combination of a first IP address, a first transport protocol, and a unique port number and maps to one of the role instances. The method further includes exposing the instance endpoints to an application to allow the application to access a particular role instance using an instance endpoint that maps to the particular role instance.

In another embodiment, an aspect of the present invention is directed to a method for a load balancer to direct load balanced messages and instance messages to role instances in a hosting environment. The method includes receiving endpoint information for a plurality of role instances for a role of a service application running in the hosting environment. The endpoint information identifies a plurality of instance endpoints for the plurality of role instances. Each instance endpoint includes a combination of a first IP address, a first transport protocol, and a unique port number and maps to one of the role instances. The endpoint information also identifies a load balanced endpoint for the plurality of role instances. The load balanced endpoint includes a combination of a second IP address, a second transport protocol and another unique port number. The method also includes when receiving, from an application, a first message that includes a first instance endpoint from the plurality of instance endpoints, directing the first message to a first role instance corresponding with the first instance endpoint. The method further includes when receiving, from the application, a second request that includes the load balanced endpoint, directing the second request to one of the role instances based on a load-balancing algorithm.

A further embodiment of the invention is directed to a system for a cloud computing platform. The system includes one or more physical machines hosting a plurality of virtual machines running a plurality of role instances providing code for a customer application. The system also includes a tenant manager that allocates a unique port number to each role instance to generate an instance endpoint for each role instance. Each instance endpoint includes a combination of an IP address, a transport protocol, and one of the unique port numbers. The system further includes a load balancer programmed with a load balanced endpoint and the instance endpoints. The load balancer is configured to route application messages using instance endpoints directly to corresponding role instances and to route application messages using the load balanced endpoint to role instances based on a load-balancing algorithm.

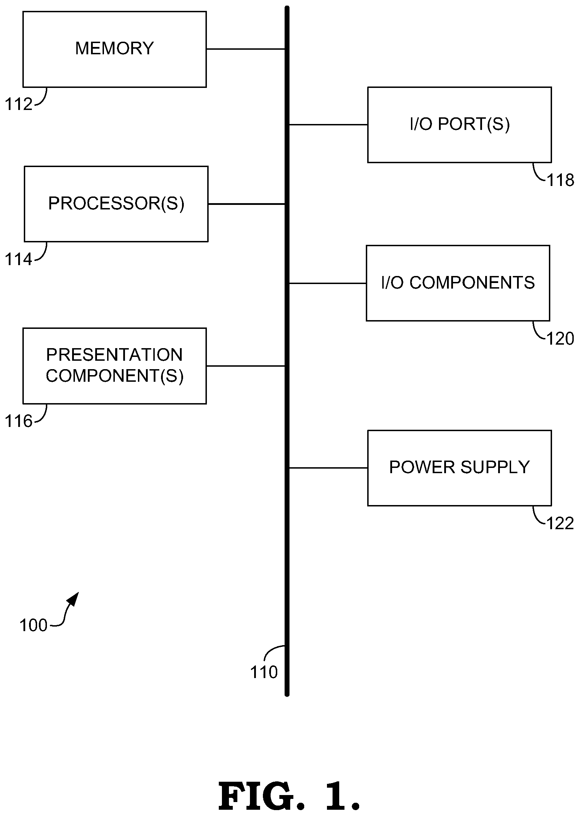

Having described an overview of embodiments of the present invention, an exemplary operating environment in which embodiments of the present invention may be implemented is described below in order to provide a general context for various aspects of the present invention. Referring initially to FIG. 1 in particular, an exemplary operating environment for implementing embodiments of the present invention is shown and designated generally as computing device 100. Computing device 100 is but one example of a suitable computing environment and is not intended to suggest any limitation as to the scope of use or functionality of the invention. Neither should the computing device 100 be interpreted as having any dependency or requirement relating to any one or combination of components illustrated.

The invention may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The invention may be practiced in a variety of system configurations, including hand-held devices, consumer electronics, general-purpose computers, more specialty computing devices, etc. The invention may also be practiced in distributed computing environments where tasks are performed by remote-processing devices that are linked through a communications network.

With reference to FIG. 1, computing device 100 includes a bus 110 that directly or indirectly couples the following devices: memory 112, one or more processors 114, one or more presentation components 116, input/output (I/O) ports 118, input/output components 120, and an illustrative power supply 122. Bus 110 represents what may be one or more busses (such as an address bus, data bus, or combination thereof). Although the various blocks of FIG. 1 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. The inventors recognize that such is the nature of the art, and reiterate that the diagram of FIG. 1 is merely illustrative of an exemplary computing device that can be used in connection with one or more embodiments of the present invention. Distinction is not made between such categories as "workstation," "server," "laptop," "hand-held device," etc., as all are contemplated within the scope of FIG. 1 and reference to "computing device."

Computing device 100 typically includes a variety of computer-readable media. Computer-readable media can be any available media that can be accessed by computing device 100 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 100. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 112 includes computer-storage media in the form of volatile and/or nonvolatile memory. The memory may be removable, non-removable, or a combination thereof. Exemplary hardware devices include solid-state memory, hard drives, optical-disc drives, etc. Computing device 100 includes one or more processors that read data from various entities such as memory 112 or I/O components 120. Presentation component(s) 116 present data indications to a user or other device. Exemplary presentation components include a display device, speaker, printing component, vibrating component, etc.

I/O ports 118 allow computing device 100 to be logically coupled to other devices including I/O components 120, some of which may be built in. Illustrative components include a microphone, joystick, game pad, satellite dish, scanner, printer, wireless device, etc.

Some embodiments of the present invention may be implemented within a data center that operates as a platform as a service (PAAS) using a tenant/service model in which customers' applications run in a cloud service infrastructure that provides a platform for developing and running the customers' applications. The data center may include a large number of physical machines, on which virtual machines may be allocated and customer applications run.

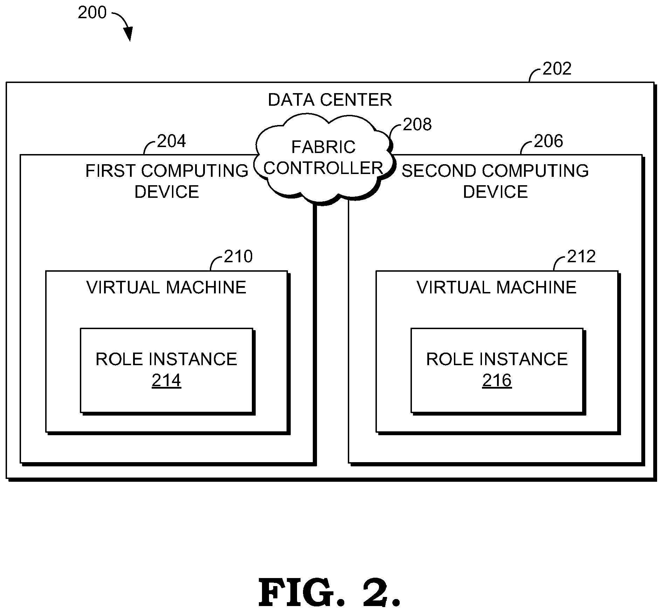

Referring to FIG. 2, a block diagram is provided that illustrates an exemplary cloud computing platform 200 in accordance with an embodiment of the present invention. It will be understood and appreciated that the cloud computing platform 200 shown in FIG. 2 is merely an example of one suitable computing system environment and is not intended to suggest any limitation as to the scope of use or functionality of embodiments of the present invention. For instance, the cloud computing platform 200 may be a public cloud, a private cloud, or a dedicated cloud or simply a collection of disparate computing devices. Neither should the cloud computing platform 200 be interpreted as having any dependency or requirement related to any single component or combination of components illustrated therein. Further, although the various blocks of FIG. 2 are shown with lines for the sake of clarity, in reality, delineating various components is not so clear, and metaphorically, the lines would more accurately be grey and fuzzy. In addition, any number of physical machines, virtual machines, data centers, role instances, or combinations thereof may be employed to achieve the desired functionality within the scope of embodiments of the present invention.

The cloud computing platform 200 includes the data center 202 configured to host and support operation of role instances 214 and 216 of a particular service application. The phrase "service application," as used herein, broadly refers to any software, or portions of software, that runs on top of, and/or accesses storage locations within, the data center 202. In embodiments, a service application is implemented as one or more roles that comprise the logical parts of the service application. Each role may include a specific set of code. Multiple instances of each role (e.g., role instance 214 and 216) may be run in the data center 202, and load balancing may be used to distribute messages across the role instances. The role instances for a given role may run the same code such that the roles instances are alike and interchangeable.

Generally, virtual machines 210 and 212 are allocated to the role instances 214 and 216 of the service application based on demands (e.g., amount of processing load) placed on the service application and/or a service definition specified by the customer in the customer's service model. As used herein, the phrase "virtual machine" is not meant to be limiting, and may refer to any software, application, operating system, or program that is executed by a processing unit to underlie the functionality of the role instances 214 and 216. Further, the virtual machines 210 and 212 may include processing capacity, storage locations, and other assets within the data center 202 to properly support the role instances 214 and 216.

In operation, the virtual machines 210 and 212 are dynamically allocated within physical resources (e.g., first computing device 204 and second computing device 206) of the data center 202, and role instances (e.g., the role instances 214 and 216) are dynamically placed on the allocated virtual machines 210 and 212 to satisfy the current processing load. In one instance, a fabric controller 208 is responsible for automatically allocating the virtual machines 210 and 212 and for placing the role instances 214 and 216 within the data center 202. By way of example, the fabric controller 208 may rely on a service definition (e.g., designed by a customer that owns the service application) to provide guidance on how and when to allocate the virtual machines 210 and 212 and to place the role instances 214 and 216 thereon.

As discussed above, the virtual machines 210 and 212 may be dynamically allocated within the first computing device 204 and second computing device 206. In accordance with embodiments of the present invention, the computing devices 204 and 206 may represent any form of computing devices, such as the computing device 100 of FIG. 1. The computing devices 204 and 206 may host and support the operations of the virtual machines 210 and 212, while simultaneously hosting other virtual machines carved out for supporting other tenants of the data center 202, including supporting the role instances of other service applications owned by different customers.

In one aspect, the role instances 214 and 216 operate within the context of the cloud computing platform 200 and, accordingly, may communicate internally through connections dynamically made between the virtual machines 210 and 212, and externally through a physical network topology to resources of a remote network. The internal connections may involve interconnecting the virtual machines 210 and 212, distributed across physical resources of the data center 202, via a network cloud (not shown). The network cloud interconnects these resources such that the role instances may recognize a location of other role instances, in order to establish a communication therebetween. In addition, the network cloud may establish this communication over channels connecting the role instances 214 and 216 of the service application.

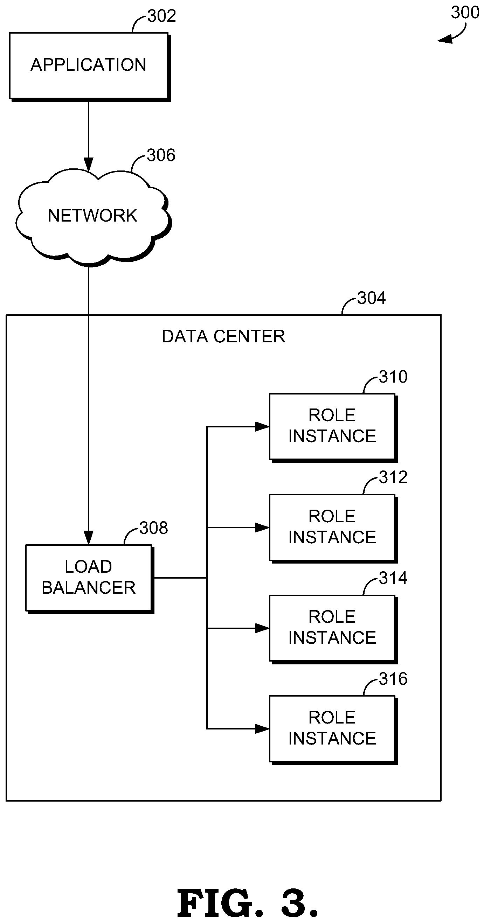

Turning now to FIG. 3, remote applications, such as the application 302, may access the services provided by a service application running on a data center 304 over a network 306, which may include, without limitation, one or more local area networks (LANs) and/or wide area networks (WANs). Such networking environments are commonplace in offices, enterprise-wide computer networks, intranets, and the Internet. As shown in FIG. 3, a number of role instances (i.e., role instance 310, role instance 312, role instance 314, and role instance 316) provide code for a particular role of a service application running in the data center 304. In accordance with embodiments of the present invention, applications, such as the application 302 may access role instances 310, 312, 314, 316 via load balancing, in which messages from applications are distributed across the role instances 310, 312, 314, 316, or may directly access one of the role instances 310, 312,314,316.

To provide for both load balancing and direct role instance access for the role instances 310, 312, 314, 316, embodiments of the present invention employ both a load balanced endpoint for the role instances 310, 312, 314, 316 and instance endpoints for each of the role instances 310, 312, 314, 316. In particular, a combination of a public IP address, a transport protocol, and a unique port number is assigned to the role instances 310, 312, 314, 316 as a load balanced endpoint. Accordingly, messages from applications, such as the application 302, targeting the load balanced endpoint is multiplexed by a load balancer 308 in the data center 304 to the various instance endpoints. For instance, if http://customer.domain.name:80 is the load balanced endpoint for the role provided by the role instances 310, 312, 314, 316, messages to this URL are distributed by the load balancer 308 among the available role instances 310, 312, 314, 316. It should be understood that any load balancing algorithm may be employed by the load balancer 308 to distribute traffic to the various role instances 310, 312, 314, 316.

In addition to assigning a load balanced endpoint to the role instances 310, 312, 314, 316, an instance endpoint is assigned to each of the role instances 310, 312, 314, 316. Each instance endpoint comprises a combination of a public IP address, a transport protocol, and a unique port number that maps to one of the role instances 310, 312, 314, 316. For instance, IP:Port1 may be assigned as the instance endpoint for role instance 310, IP:Port2 may be assigned as the instance endpoint for role instance 312, IP:Port3 may be assigned as the instance endpoint for role instance 314, and IP:Port4 may be assigned as the instance endpoint for role instance 316. The same public IP address used for the load balanced endpoint may be used as the public IP address for the instance endpoints. For instance, in some embodiments, an IPv4 address may be employed. A message from the application 302 that includes an instance endpoint is routed to the role instance that corresponds with that instance endpoint without load balancing. For instance, if a message from the application 302 includes IP:Port1, the message is directly routed to role instance 1.

In some embodiments, the same role instance may have multiple instance endpoints. In such embodiments, the service model may specify the number of instance endpoints to be provided for each role instance. The data center then allocates an address, transport protocol, port combination for each requested instance endpoint for each role.

The load balancer 308 may be implemented in software, hardware, or any combination therefore. In embodiments, the load balancer 308 is programmed with both the load balanced endpoint and the instance endpoints. This may include information mapping the load balanced endpoint to the group of role instances 310, 312, 314, 316, as well as information mapping each instance endpoint to a corresponding role instance. As such, the load balancer 308 has sufficient information to direct traffic using an instance endpoint over a direct port to a corresponding role instance, and to load balance traffic over a load balanced endpoint to one of the role instances 310, 312, 314, 316 based on a load-balancing algorithm.

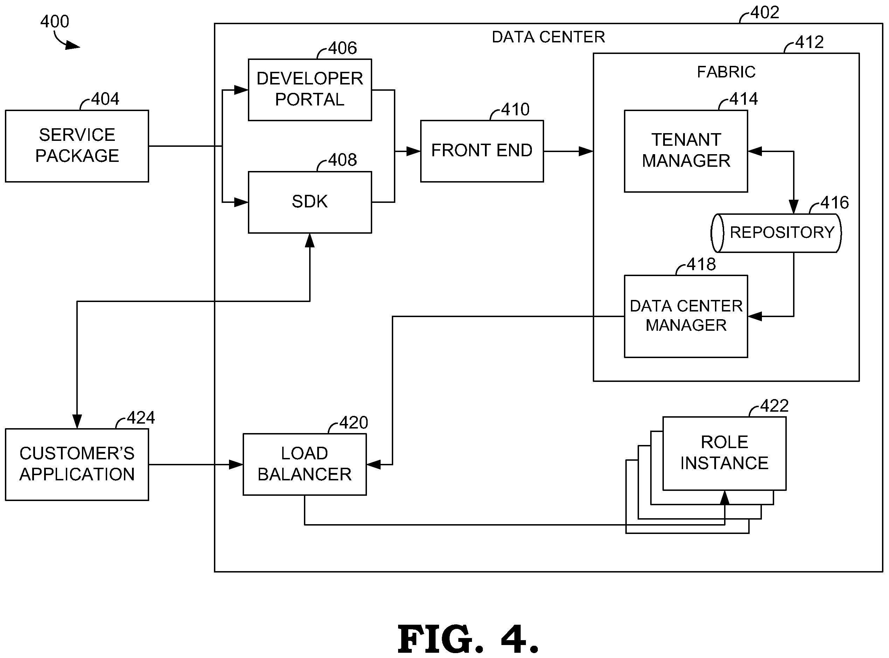

With reference now to FIG. 4, a block diagram is provided that illustrates an overall system 400 that includes a data center 402 allocating load balanced endpoints and instance endpoints and directing messages to role instances in accordance with an embodiment of the present invention. Initially, a customer may define the instance endpoints as part of the service definition for each role the customer wishes to have direct connectivity. The service definition may be validated and a corresponding service package 404 containing the service definition generated.

The service definition may specify use of instance endpoints and port allocations in a number of different manners in accordance with various embodiments of the present invention. For instance, in some embodiments, the service definition may simply specify that the customer wishes to use instance endpoints for a role and the data center 402 may handle allocating ports to role instances. In some embodiments, the data center 402 may provide for different port allocation schemes (e.g., random port allocation), and the customer may or may not choose to specify a port allocation scheme in the service definition. In further embodiments, the customer can specify a port range in the service definition for use for allocating port number for instance endpoints. For example, the service definition could specify a port range of 5000-5099, and port 5000 could be assigned to the first role instance and port 5099 could be assigned to the 100^{th} role instance.

After establishing the service definition and generating the service package 404, the service package 404 may be deployed either via a developer portal 406 or using an SDK 408 to the customer's subscription in the data center 402. A front end 410 may validate the service definition and pass it to the data center fabric 412 for deployment.

The fabric 412 includes a tenant manager 414 that allocates the necessary resources in accordance with the service definition and persists the goal state to a repository 416 based on the service definition. The tenant manager 414 also performs port allocations in accordance with the service definition to provide instance endpoints for role instances and persists the goal state to the repository 416.

A data center manager 418 uses the goal state that includes the instance endpoints to program a load balancer 420. Additionally, a node goal state driving workflow of the fabric 412 coordinates driving resources to the goal state (e.g., OS deployment, bootstrapping roles, etc.).

Once the role instances 422 are in ready state, the customers' application 424 can connect to each of the individual role instances via the load balancer 420. In some instances, the application 422 may issue a message using a load balanced endpoint. In such instances, the load balancer 420 employs a load balancing algorithm to direct the message to one of the role instances 422. Alternatively, the application 424 may issue a message using a particular instance endpoint (i.e., IP:port combination mapped to a particular role instance) to access a particular role instance.

In some embodiments, the application 424 may invoke the front end 410 via the SDK to determine the instance endpoint for the particular role instance to be accessed. The front end 410 may invoke the tenant manager 414 to retrieve this information and hand it back to the application 424. When the load balancer 420 receives a message with a particular instance endpoint, the load balancer 420 may identify the correct role instance from the role instances 422 to which to route the message based on instance endpoint information programmed into the load balancer 420. For instance, in embodiments, the load balancer 420 may include mapping information that maps the public facing instance endpoint to a direct IP mapping for the role instance within the data center 402.

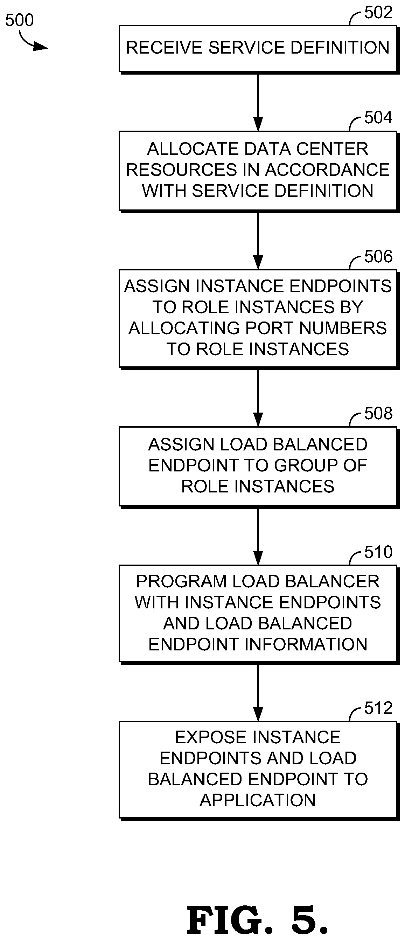

Turning now to FIG. 5, a flow diagram is provided that illustrates a method 500 for configuring a data center with role instances having assigned instance endpoints and a load balanced endpoint to facilitate direct traffic and load balanced traffic to the role instances in accordance with an embodiment of the present invention. Initially, as shown at block 502, a service definition is received from a customer at a data center. The service definition may specify a variety of information regarding the customer's service application, such as resources requested and role instances to instantiate. Additionally, the service definition may specify that the data center assign instance endpoints to role instances for a role of the service application.

As shown at block 504, the data center allocates data center resources in accordance with the service definition. This may include allocating virtual machines on physical machines within the data center, and allocating role instances to virtual machines. Additionally, the data center assigns instance endpoints to role instances in accordance with the service definition, as shown at block 506. This may include allocating unique port numbers to the role instances to generate the instance endpoints as combinations of a public IP address, transport protocol, and unique port numbers. Any of a variety of port allocation schemes may be employed by the data center. In some embodiments, the customer may specify in the service definition the port allocation scheme to be used by the data center, while in other embodiments, the port allocation scheme may not be specified in the service definition and the data center may chose which scheme to employ.

In addition to assigning an instance endpoint to each role instance, the data center assigns a load balanced endpoint to the group of role instances, as shown at block 508. While the instance endpoints allow for external applications to directly access individual role instances without load balancing, the load balanced endpoint allows for load balanced distribution of application messages over the group of role instances.

A load balancer in the data center is programmed within information regarding the instance endpoints and load balanced endpoints, as shown at block 510. Additionally, the instance endpoints and load balanced endpoint are exposed to an application, as shown at block 512. The instance endpoints and load balanced endpoint may be exposed to the application in a number of different manners. In some embodiments, the instance endpoints and load balanced endpoint may be exposed via an API. The API may provide mapping information mapping role instances to instance endpoints. Accordingly, the application may issue messages using instance endpoints or the load balanced endpoint to either directly access a role instance (using an instance endpoint) or access any role instance via load balancing (using the load balanced endpoint).

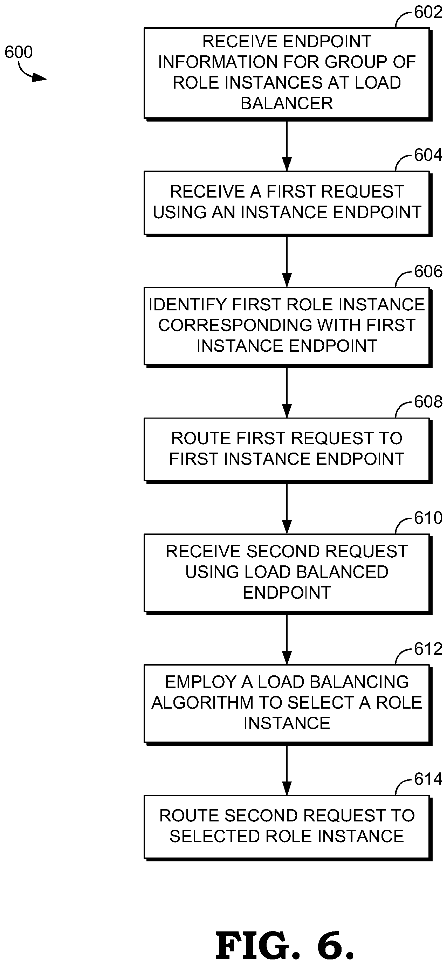

Turning to FIG. 6, a flow diagram is provided that illustrates a method 600 for programming a load balancer with instance endpoints and a load balanced endpoint and routing messages to role instances in accordance with an embodiment of the present invention. Initially, as shown at block 602, endpoint information for a group of role instances corresponding with a particular role of a customer's service application is received at a load balancer to program the load balancer. The endpoint information identifies instance endpoints for the role instances. In embodiments, each instance endpoint may include a combination of an IP address, transport protocol, and a unique port number. The endpoint information also includes a load balanced endpoint for load balancing across the role instances. In embodiments, the load balanced endpoint may include a combination of an IP address, transport protocol, and another unique port number.

As shown at block 604, the load balancer receives, from an application, a first message that includes a first instance endpoint. Based on the endpoint information used to program the load balancer, the load balancer identifies a first role instance corresponding with the first instance endpoint, as shown at block 606. Additionally, the load balancer directly routes the first message to the first instance endpoint, as shown at block 608.

The load balancer also receives, from the application, a second message that includes the load balanced endpoint, as shown at block 610. Based on the endpoint information used to program the load balancer, the load balancer recognizes the load balanced endpoint and employs a load-balancing algorithm to select a particular role instance, as shown at block 612. The load balancer then directs the second message to the selected role instance, as shown at block 614.

As can be understood, embodiments of the present invention provide for providing role instance reachability in a data center using both load balancing and direct role instance access by allocating unique port numbers to role instances. The present invention has been described in relation to particular embodiments, which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects set forth above, together with other advantages which are obvious and inherent to the system and method. It will be understood that certain features and subcombinations are of utility and may be employed without reference to other features and subcombinations. This is contemplated by and is within the scope of the claims.

## Claims

1. One or more computer storage media storing computer usable instructions that, when used by one or more computing devices, cause the one or more computing devices to perform a method, the method comprising:
providing a plurality of role instances (422) in a hosting environment, each role instance comprising code for a customer application (424) running in the hosting environment;
assigning (506) a plurality of instance endpoints for the plurality of role instances, each instance endpoint comprising a combination of a first IP address, a first transport protocol, and a unique port number that maps to the respective role instance; and
exposing (512) the instance endpoints to an application to allow the application to access a particular role instance using an instance endpoint that maps to the particular role instance;
assigning (508) a load balanced endpoint for the plurality of role instances, the load balanced endpoint comprising a combination of the first IP address, a second transport protocol, and another unique port number; and
exposing the load balanced endpoint to the application to allow the application to employ the load balanced endpoint to access any one of the role instances via load balancing; and
programming (510) a load balancer (420) with the instance endpoints and the load balanced endpoint, wherein the load balancer is configured to route application messages using instance endpoints directly to corresponding role instances and to route application messages using the load balanced endpoint to role instances based on a load-balancing algorithm.

2. The one or more computer storage media of claim 1, wherein the method further comprises:
receiving (502) a service definition for the customer application;
validating the service definition;
allocating (504) hosting environment resources in accordance with the service definition.

3. The one or more computer storage media of claim 2, wherein the service definition specifies a port allocation scheme to be employed by the hosting environment for assigning port numbers to the role instances.

4. The one or more computer storage media of claim 2, wherein the service definition specifies a port range for allocating port numbers to the role instances.

5. The one or more computer storage media of claim 1, wherein the instance endpoints are exposed to the application by an API, wherein the API provides mapping information mapping role instances to instance endpoints.

6. A method for a load balancer to direct load balanced messages and instance messages to role instances in a hosting environment, the method comprising:
receiving (602) endpoint information for a plurality of role instances (422) for a role of a service application running in the hosting environment, the endpoint information identifying a plurality of instance endpoints for the plurality of role instances, each instance endpoint comprising a combination of a first IP address, a first transport protocol, and a unique port number that maps to the respective role instance, the endpoint information also identifying a load balanced endpoint for the plurality of role instances, the load balanced endpoint comprising a combination of the first IP address, a second transport protocol and another unique port number;
when receiving (604), from an application (424), a first message that includes a first instance endpoint from the plurality of instance endpoints, directly routing (608) the first message to a first role instance corresponding with the first instance endpoint; and
when receiving (610), from the application, a second request that includes the load balanced endpoint, directing (614) the second request to one of the role instances based on a load-balancing algorithm.

7. A system for a cloud computing platform, the system comprising:
one or more physical machines hosting a plurality of virtual machines running a plurality of role instances (422) providing code for a customer application (424);
a tenant manager (414) that allocates a unique port number to each role instance to generate an instance endpoint for each role instance, each instance endpoint comprising a combination of a first IP address, a transport protocol, and one of the unique port numbers that maps to the respective role instance; and
a load balancer (420) programmed with a load balanced endpoint and the instance endpoints, the load balanced endpoint comprising a combination of the first IP address, a second transport protocol and another unique port number, wherein the load balancer is configured to route application messages using instance endpoints directly to corresponding role instances and to route application messages using the load balanced endpoint to role instances based on a load-balancing algorithm.

## Patentansprüche

1. Ein oder mehrere Computerspeichermedien, die von einem Computer nutzbare Befehle speichern, die, wenn sie von einer oder mehreren Recheneinrichtungen verwendet werden, die eine oder mehreren Recheneinrichtungen veranlassen, ein Verfahren auszuführen, wobei das Verfahren umfasst:
Bereitstellen mehrerer Rolleninstanzen (422) in einer Rechenumgebung, wobei jede Rolleninstanz einen Code für eine Kundenanwendung (424) enthält, die in der Rechenumgebung ausgeführt wird;
Zuweisen (506) von mehreren Instanzenendpunkten für die mehreren Rolleninstanzen, wobei jeder Instanzenendpunkt eine Kombination aus einer ersten IP-Adresse, einem ersten Transportprotokoll und einer eindeutigen Portnummer, die der entsprechenden Rolleninstanz zugeordnet ist, aufweist; und
Zugänglichmachen (512) der Instanzenendpunkte für eine Anwendung, so dass die Anwendung auf eine spezielle Rolleninstanz unter Anwendung eines Instanzenendpunktes, der der speziellen Rolleninstanz zugeordnet ist, zugreifen kann;
Zuweisen (508) eines Last ausgeglichenen Endpunkts für die mehreren Rolleninstanzen, wobei der Last ausgeglichene Endpunkt eine Kombination aus der ersten IP-Adresse, einem zweiten Transportprotokoll und einer weiteren eindeutigen Portnummer aufweist; und
Zugänglichmachen des Last ausgeglichenen Endpunkts für die Anwendung, so dass die Anwendung den Last ausgeglichenen Endpunkt verwenden kann, um auf jede beliebige Rolleninstanz über Lastausgleich zuzugreifen; und
Programmieren (510) einer Lastausgleichseinheit (420) mit den Instanzenendpunkten und dem Last ausgeglichenen Endpunkt, wobei die Lastausgleichseinheit ausgebildet ist, Anwendungsnachrichten unter Anwendung von Instanzenendpunkten direkt zu entsprechenden Rolleninstanzen weiterzuleiten und Anwendungsnachrichten unter Anwendung des Last ausgeglichenen Endpunkts zu Rolleninstanzen auf der Grundlage eines Lastausgleichsalgorithmus weiterzuleiten.

2. Ein oder mehrere Computerspeichermedien nach Anspruch 1, wobei das Verfahren ferner umfasst:
Empfangen (502) einer Dienstdefinition für die Kundenanwendung;
Validieren der Dienstdefinition;
Reservieren (504) von Rechenumgebungsressourcen entsprechend der Dienstdefinition.

3. Ein oder mehrere Computerspeichermedien nach Anspruch 2, wobei die Dienstdefinition ein Portzuweisungsschema angibt, das für die Rechenumgebung bei der Zuweisung von Portnummern zu den Rolleninstanzen zu verwenden ist.

4. Ein oder mehrere Computerspeichermedien nach Anspruch 2, wobei die Dienstdefinition einen Portbereich zur Zuordnung von Portnummern zu den Rolleninstanzen angibt.

5. Ein oder mehrere Computerspeichermedien nach Anspruch 1, wobei die Instanzenendpunkte für die Anwendung zugänglich gemacht werden mittels einer API, wobei die API Zuordnungsinformation bereitstellt, die Rolleninstanzen den Instanzenendpunkten zuordnet.

6. Verfahren für eine Lastausgleichseinheit zur Weiterleitung von Last ausgeglichenen Nachrichten und Instanzennachrichten zu Rolleninstanzen in einer Rechenumgebung, wobei das Verfahren umfasst:
Empfangen (602) von Endpunktinformation für mehrere Rolleninstanzen (422) für eine Rolle einer Dienstanwendung, die in der Rechenumgebung ausgeführt wird, wobei die Endpunktinformation mehrere Instanzenendpunkte für die mehreren Rolleninstanzen kennzeichnet, wobei jeder Instanzenendpunkt eine Kombination aus einer ersten IP-Adresse, einem ersten Transportprotokoll und einer eindeutigen Portnummer; die der entsprechenden Rolleninstanz zugeordnet ist, aufweist, wobei die Endpunktinformation ferner einen Last ausgeglichenen Endpunkt für die mehreren Rolleninstanzen kennzeichnet, und wobei der Last ausgeglichene Endpunkt eine Kombination aus der ersten IP-Adresse, einem zweiten Transportprotokoll und einer weiteren eindeutigen Portnummer enthält;
wenn aus einer Anwendung (424) eine erste Nachricht empfangen wird (604), die einen ersten Instanzenendpunkt aus den mehreren Instanzenendpunkten enthält, direktes Weiterleiten (608) der ersten Nachricht zu einer ersten Rolleninstanz, die dem ersten Instanzenendpunkt entspricht; und
wenn aus der Anwendung eine zweite Anforderung, die den Last ausgeglichenen Endpunkt enthält, empfangen wird (610), Weiterleiten (614) der zweiten Anforderung zu einer der Rolleninstanzen auf der Grundlage eines Lastausgleichsalgorithmus.

7. System für eine Cloud-Rechenplattform, wobei das System umfasst:
eine oder mehrere physikalische Maschinen, die mehrere virtuelle Maschinen enthalten, die mehrere Rolleninstanzen (422) ausführen, die Code für eine Kundenanwendung (424) bereitstellen;
einen Komponentenverwalter (414), der Rolleninstanzen eine eindeutige Portnummer zuordnet, um einen Instanzenendpunkt für jede Rolleninstanz zu erzeugen, wobei jeder Instanzenendpunkt eine Kombination aus einer ersten IP-Adresse, einem Transportprotokoll und einer der eindeutigen Portnummern, die der entsprechenden Rolleninstanz zugeordnet ist, aufweist;
eine Lastausgleichseinheit (420), die mit einem Last ausgeglichenen Endpunkt und den Instanzenendpunkten programmiert ist, wobei der Last ausgeglichene Endpunkt eine Kombination aus der ersten IP-Adresse, einem zweiten Transportprotokoll und einer weiteren eindeutigen Portnummer aufweist, wobei die Lastausgleichseinheit ausgebildet ist, Anwendungsnachrichten unter Anwendung von Instanzenendpunkten direkt zu entsprechenden Rolleninstanzen weiterzuleiten und Anwendungsnachrichten unter Anwendung des Last ausgeglichenen Endpunkts zu Rolleninstanzen auf der Grundlage eines Lastausgleichsalgorithmus weiterzuleiten.

## Revendications

1. Support ou supports d'enregistrement informatique stockant des instructions utilisables sur ordinateur qui, lorsqu'elles sont utilisées par un ou des dispositifs informatiques, font exécuter un procédé par le ou les dispositifs informatiques, le procédé consistant à :
fournir une pluralité d'instances de rôle (422) dans un environnement d'hébergement, chaque instance de rôle comprenant un code pour une application client (424) fonctionnant dans l'environnement d'hébergement ;
assigner (506) une pluralité de points de terminaison d'instance pour la pluralité d'instances de rôle, chaque point de terminaison d'instance comprenant une combinaison d'une première adresse IP, d'un premier protocole de transport et d'un numéro de port unique qui correspond à l'instance de rôle respective ; et
présenter (512) les points de terminaison d'instance à une application pour permettre à l'application d'accéder à une instance de rôle spécifique utilisant un point de terminaison d'instance qui correspond à l'instance de rôle spécifique ;
assigner (508) un point de terminaison à charge équilibrée pour la pluralité d'instances de rôle, le point de terminaison à charge équilibrée comprenant une combinaison de la première adresse IP, d'un second protocole de transport et d'un autre numéro de port unique ; et
présenter le point de terminaison à charge équilibrée à l'application pour permettre à l'application d'utiliser le point de terminaison à charge équilibrée pour accéder à n'importe laquelle des instances de rôle par équilibrage de charge ; et
programmer (510) un équilibreur de charge (420) avec les points de terminaison d'instance et le point de terminaison à charge équilibrée, dans lequel l'équilibreur de charge est configuré pour acheminer des messages d'application utilisant des points de terminaison d'instance directement vers des instances de rôle correspondantes et pour acheminer des messages d'application utilisant le point de terminaison à charge équilibrée vers des instances de rôle sur la base d'un algorithme d'équilibrage de charge.

2. Support ou supports d'enregistrement informatique selon la revendication 1, dans lequel le procédé consiste, en outre, à :
recevoir (502) une définition de service pour l'application client ;
valider la définition de service ;
affecter (504) des ressources d'environnement d'hébergement en fonction de la définition de service.

3. Support ou supports d'enregistrement informatique selon la revendication 2, dans lequel la définition de service spécifie un schéma d'affectation de port destiné à être utilisé par l'environnement d'hébergement pour assigner des numéros de port aux instances de rôle.

4. Support ou supports d'enregistrement informatique selon la revendication 2, dans lequel la définition de service spécifie une gamme de ports pour affecter des numéros de port aux instances de rôle.

5. Support ou supports d'enregistrement informatique selon la revendication 1, dans lequel les points de terminaison d'instance sont présentés à l'application par une API, dans lequel l'API fournit des informations de mise en correspondance mettant en correspondance des instances de rôle et des points de terminaison d'instance.

6. Procédé pour un équilibreur de charge, pour diriger des messages à charge équilibrée et des messages d'instance vers des instances de rôle dans un environnement d'hébergement, le procédé consistant à :
recevoir (602) des informations de point dé terminaison pour une pluralité d'instances de rôle (402) pour un rôle d'une application de service fonctionnant dans l'environnement d'hébergement, les informations de point de terminaison identifiant une pluralité de points de terminaison d'instance pour la pluralité d'instances de rôle, chaque point de terminaison d'instance comprenant une combinaison d'une première adresse IP, d'un premier protocole de transport et d'un numéro de port unique qui correspond à l'instance de rôle respective, les informations de point de terminaison identifiant également un point de terminaison à charge équilibrée pour la pluralité d'instances de rôle, le point de terminaison à charge équilibrée comprenant une combinaison de la première adresse IP, d'un second protocole de transport et d'un autre numéro de port unique ;
lors de la réception (604), depuis une application (424), d'un premier message qui inclut un premier point de terminaison d'instance de la pluralité de points de terminaison d'instance, acheminer directement (608) le premier message vers une première instance de rôle correspondant au premier point de terminaison d'instance ; et
lors de la réception (610), depuis l'application, d'une seconde demande qui inclut le point de terminaison à charge équilibrée, diriger (614) la seconde demande vers une des instances de rôle sur la base d'un algorithme d'équilibrage de charge.

7. Système pour plateformé informatique en nuage, le système comprenant :
une ou plusieurs machines physiques hébergeant une pluralité de machines virtuelles sur lesquelles sont exécutées une pluralité d'instances de rôle (422) fournissant un code pour une application client (424) ;
un gestionnaire de tenants (414) qui affecte un numéro de port unique à chaque instance de rôle pour générer un point de terminaison d'instance pour chaque instance de rôle, chaque point de terminaison d'instance comprenant une combinaison d'une première adresse IP, d'un protocole de transport et d'un des numéros de port uniques qui correspond à l'instance de rôle respective ; et
un équilibreur de charge (420) programmé avec un point de terminaison à charge équilibrée et les points de terminaison d'instance, le point de terminaison à charge équilibrée comprenant une combinaison de la première adresse IP, d'un second protocole de transport et d'un autre numéro de port unique, dans lequel l'équilibreur de charge est configuré pour acheminer des messages d'application utilisant des points de terminaison d'instance directement vers des instances de rôle correspondantes et pour acheminer des messages d'application utilisant le point de terminaison à charge équilibrée vers des instances de rôle sur la base d'un algorithme d'équilibrage de charge.
